# EUROPÄISCHE PATENTSCHRIFT

(11) **EP 1 715 574 B1**
(45) Veröffentlichungstag und Bekanntmachung des Hinweises auf die Patenterteilung: **08.08.2012**
(21) Anmeldenummer: 05008664.4
(22) Anmeldetag: 20.04.2005
(51) Int. Cl.: H02P 7/29, H02M 1/12

(54) **Verfahren zum Betreiben eines elektrischen Verbrauchers sowie danach arbeitendes Ansteuersystem**
Method for operating an electrical consumer and control system operating according to that method
Méthode pour actionner un consommateur électrique et un système de commande fonctionnant selon cette méthode

(43) Veröffentlichungstag der Anmeldung: 25.10.2006
(73) Patentinhaber: Brose Fahrzeugteile GmbH & Co. KG, Würzburg, 97076 Würzburg (DE)
(72) Erfinder: De Filippis, Pietro, 20124 Milano (IT); Kuschnarew, Christian, 97076 Würzburg (DE); Redelberger, Harald, 97273 Kürnach (DE); Schwarzkopf, Johannes, 97828 Marktheidenfeld (DE); Zick, Stefan, 97072 Würzburg (DE)
(74) Vertreter: Isarpatent

(56) Entgegenhaltungen:
- EP-A2- 1 383 232
- DE-A1- 19 522 045
- US-A1- 2004 160 201
- US-A1- 2005 073 865
- KOLAR, J.W.; WOLBANK, T.M.; SCHRÖDL, M: "Analytical calculation of the RMS current stress on the DC link capacitor of voltage DC link PWM converter systems" NINTH INTERNATIONAL CONFERENCE ON ELECTRICAL MACHINES AND DRIVES, September 1999 (1999-09), Seiten 81-89, XP002342747
- ANWAR, M.N. ; TEIMOR, M.: "An analytical method for selecting DC-link-capacitor of a voltage stiff inverter" 37TH IAS ANNUAL MEETING. CONFERENCE RECORD OF THE INDUSTRY APPLICATIONS CONFERENCE, Bd. 2, Oktober 2002 (2002-10), Seiten 803-810, XP002342748

## Beschreibung

Die Erfindung betrifft ein Verfahren zum Betreiben eines elektrischen Verbrauchers, insbesondere eines Elektromotors, dem ein von einer Strom- oder Spannungsquelle erzeugter und von einem Kondensator gepufferter Betriebsstrom zugeführt wird. Die Erfindung bezieht sich weiter auf ein danach arbeitendes elektrisches Ansteuersystem für einen elektrischen Verbraucher, insbesondere für eine (ohmisch) induktive Last, vorzugsweise für einen Elektromotor, z. B. für einen bürstenbehafteten oder bürstenlosen Gleichstrommotor.

Bei einem elektrischen Antriebs- oder Ansteuersystem eines Elektromotors wird häufig ein Kondensator, vorzugsweise ein Elektrolyt-Kondensator, oder eine Kondensatoranordnung als Energiezwischenspeicher (Zwischenkreiskondensator) eingesetzt. Dabei wird ein von einer Spannungs- oder Stromquelle gelieferter Betriebsstrom vom Kondensator zwischengespeichert oder gepuffert, so dass der Stromwert des von der Spannungsquelle gelieferten Betriebsstroms unterhalb des Stromwertes des für den jeweils gewünschten Betriebszustand des Elektromotors erforderlichen Betriebsstrom eingestellt werden kann.

Ein hierzu üblicherweise eingesetztes elektronisches Ansteuerungssystem stellt in Abhängigkeit vom gewünschten oder geforderten Betriebszustand des Elektromotors, insbesondere in Abhängigkeit von der ausgewählten oder eingestellten Motordrehzahl, Ein- und Ausschaltzyklen des Motors ein. Dabei erfolgt während eines Ausschaltzyklus die Aufladung des Kondensators und somit die Pufferung des Betriebsstroms. Im darauf folgenden Einschaltzyklus liefert der Kondensator in Folge dessen Entladung den fehlenden Stromanteil oder -betrag zum für den jeweiligen Betriebszustand erforderlichen Betriebsstrom des Elektromotors.

Bei dieser Betriebsart des elektrischen Ansteuersystems unter Verwendung eines Kondensators, beispielsweise eines Aluminium-Elektrolyt-Kondensators, als Energiezwischenspeicher ist zu berücksichtigen, dass die Betriebssicherheit eines Elektrolyt-Kondensators von dessen Betriebstemperatur und/oder von dessen Wechselstrombelastung abhängt. So kann ein Überschreiten entsprechender kondensatorspezifischer Temperatur-oder Belastungswerte zu einer erheblichen Reduzierung der Lebensdauer oder sogar zur Zerstörung des Kondensators führen. Eine die Betriebssicherheit gefährdende Betriebstemperatur des Kondensators kann dabei aus einer hohen Wechselstrombelastung und/oder aus einer hohen Umgebungstemperatur resultieren.

Aus Johann W. Kolar et al.: "Analytical Calculation of the RMS Current Stress on the DC Link Capacitor of Voltage DC Link PWM Converter Systems"; Ninth International Conference on Electrical Machines and Drives, Conference Publication No. 468, IEE, 1999, ist ein Verfahren zur analytischen Berechnung des Ripplestromes an einem Zwischenkreiskondensator bekannt.

Aus der EP 1 383 232 A2 ist ein Verfahren zur Ansteuerung eines elektrischen Antriebs über ein Ansteuerungsmodul, das mit einer Elektronikplatine elektrisch verbundene Leistungsschalter (3) über ein PWM-Signal (27) ansteuert, bekannt. Dabei wird bei Erreichen einer ersten Grenztemperatur der die Leistungsschalter ansteuernden Elektronikplatine das momentane Tastverhältnis auf ein modifiziertes, maximales Tastverhältnis geändert und bei Erreichen einer zweiten Grenztemperatur, die höher liegt als die erste Grenztemperatur, das momentane Tastverhältnis auf seinen Minimalwert zurückgenommen.

Der Erfindung liegt die Aufgabe zu Grunde, bei einem Verfahren zum Betreiben eines elektrischen Verbrauchers, insbesondere eines Elektromotors, die Betriebszuverlässigkeit und - sicherheit zu erhöhen. Des Weiteren soll ein besonders geeignetes elektrisches oder elektronisches Ansteuersystem für einen solchen Verbraucher angegeben werden.

Bezüglich des Verfahrens wird diese Aufgabe erfindungsgemäß gelöst durch die Merkmale des Anspruchs 1. Dazu wird dem Verbraucher oder Elektromotor ein von einer Strom- oder Spannungsquelle erzeugter und vom Kondensator gepufferter oder zwischengespeicherter Betriebsstrom über ein Stellglied zugeführt, das mit einem außerhalb eines Ausschluss- oder Schwellwertbereiches liegenden Tastverhältnis angesteuert wird.

Unter Schwellwertbereich wird hierbei ein als verboten oder unerwünscht vorgegebener, festgelegter oder definierter Bereich (Ausschlussbereich) oberhalb oder unterhalb eines Grenzwertes verstanden. Unter Tastverhältnis wird der insbesondere prozentuale Anteil der Einschaltdauer des Stellgliedes bezogen auf die Periodendauer einer Taktperiode verstanden, wobei die Differenz zwischen der Periodendauer und der Einschaltdauer der Ausschaltdauer des Stellgliedes entspricht. Das Tastverhältnis gibt somit den relativen Anteil der Zeitdauer eines Einschaltzyklus und/oder der Zeitdauer eines Ausschaltzyklus an der Periodendauer einer Taktperiode an.

Die Erfindung geht dabei von der Überlegung aus, dass die Betriebssicherheit eines in einem Ansteuerungssystem eines Elektromotors als Energiezwischenspeicher eingesetzten Kondensators erhöht werden kann, wenn dessen betriebsbedingte Belastung in jedem Betriebszustand, insbesondere bei erhöhter Umgebungstemperatur, möglichst gering ist. Wird bei einer vorzugsweise elektronischen Ansteuerung eines eine ohmsche oder induktive Last darstellenden Elektromotors ein Taktsignal mit auf eine Taktperiode bezogenen einstellbaren Puls- und Pausendauern verwendet, so kann die Belastung des Kondensators dadurch verringert werden, dass bestimmte, eine erhöhte Kondensatorbelastung hervorrufende Tastverhältnisse für die Ansteuerung und damit für den Betrieb des Elektromotors vermieden, oder aber zumindest nur kurzzeitig eingestellt werden.

Unter kurzzeitig wird hierbei ein von der thermischen Zeitkonstante des Kondensators abhängiges Zeitintervall verstanden, das kurz ist im Vergleich zu einer beispielsweise von einer übergeordneten Steuereinrichtung vorgegebenen oder eingestellten Einschaltdauer des Elektromotors während eines Betriebszyklus. Wird beispielsweise bei einem Kraftfahrzeug (Kfz) von einem Kfz-Steuergerät eine bestimmte Motorlaufdauer, z. B. eine bestimmte Lüfter- oder Gebläselaufdauer, vorgegeben, so wird dieses Tastverhältnis nur für eine in Bezug auf die thermische Zeitkonstante kurze Zeitdauer eingestellt. Die Zeitdauer ist daher kurz im Vergleich zur Gesamtlaufdauer, so dass das entsprechende Tastverhältnis nur für eine vergleichsweise geringe Anzahl von Taktperioden eingestellt ist.

Die zu vermeidenden bzw. auszuschließenden oder nur kurzzeitig eingestellten Tastverhältnisse können auf unterschiedliche Weise ermittelt oder bestimmt werden. Insbesondere kann ein eine erhöhte Belastung des Kondensators hervorrufendes Tastverhältnis anhand einer Ansteuerungsfunktion ermittelt werden, die die Abhängigkeit eines Betriebsparameters oder Betriebszustands vom Tastverhältnis zeigt oder darstellt. So entsteht beispielsweise bei der Ansteuerung eines eine ohmsche/induktive Last darstellenden Elektromotors mittels eines Pulsweitenmodulations-Stellers oder -Generators (PWM-Steller bzw. PWM-Generator) infolge der Taktung eines Leistungshalbleiters des Stellgliedes auf der Versorgungsseite der Ansteuerschaltung eine so genannte Stromwelligkeit. Diese repräsentiert den durch den Lade- und Entladevorgang des Kondensators erzeugten Wechselstromanteil (Ripplestrom), der durch den Kondensator aufgenommen werden muss und diesen thermisch belastet. Erkanntermaßen besteht zwischen der Stromwelligkeit und dem jeweiligen Tastverhältnis ein funktionaler Zusammenhang. Dabei zeigt die Stromwelligkeit als Funktion des Tastverhältnisses bei einem bestimmten Tastverhältnis ein Maximum. Dieses Maximum oder ein entsprechender Maximalwertbereich hängt hinsichtlich des zugehörigen Wertes der Stromwelligkeit unter anderem ab vom Laststrom, von einer Gegenspannung und/oder von der jeweiligen Quellenspannung und somit auch von der jeweiligen, durch die Motordrehzahl vorgegebenen Betriebsspannung. Dabei erhöht sich der Betrag der Stromwelligkeit mit dem Motor- oder Laststrom.

Aus einer entsprechenden Kennlinie oder einem entsprechenden Kennlinienfeld ist somit ein verbotener Bereich, d. h. ein im Bereich des jeweiligen Maximums liegender Schwell- oder Grenzwertbereich der zugehörigen Funktionswerte eines Tastverhältnisses ableitbar, das zur Vermeidung einer Überlastung des Kondensators nicht oder lediglich zeitlich begrenzt einzustellen ist. Dieser funktionale Zusammenhang zwischen dem Tastverhältnis - oder einer dieses wiederum bestimmenden Motordrehzahl - und dem entsprechenden Betriebszustand, d. h. insbesondere der Stromwelligkeit oder dem Kondensatorstrom, der Kondensatortemperatur, der Umgebungstemperatur und/oder der Betriebs-, Kondensator- oder Versorgungsspannung kann gleichermaßen oder analog sowohl zum Betreiben eines mit Bürsten betriebenen (bürstenbehafteten) als auch eines bürstenlosen Elektromotors herangezogen werden.

Dazu wird zweckmäßigerweise das Stellglied eines elektronisch gesteuerten Ansteuersystems des Motors vorzugsweise mit einem oberhalb eines ersten (oberen) Grenzwertes, d. h. insbesondere mit einem oberhalb des verbotenen Bereiches oder des jeweiligen Maximums liegenden Tastverhältnis angesteuert. Dazu wird das Stellglied mit einem Tastverhältnis kleiner oder gleich 100% und größer oder gleich einem dem ersten Schwell- oder Grenzwert entsprechenden Tastverhältnis angesteuert.

Dadurch ist sichergestellt, dass mindestens die geforderte Motorleistung auch tatsächlich erreicht oder bereitgestellt wird, was insbesondere bei einem Lüfter- oder Gebläsemotor eines Kraftfahrzeuges gewünscht ist. Grundsätzlich kann das Stellglied jedoch auch mit einem unterhalb eines zweiten (unteren) Schwell- bzw. Grenzwertes des verbotenen Bereiches - und dabei unterhalb des jeweiligen Maximums - liegenden Tastverhältnis angesteuert werden, insbesondere wenn betriebsbedingt eine vergleichsweise geringe Motorleistung ausreichend ist.

Bezüglich des Ansteuersystems wird die genannte Aufgabe erfindungsgemäß gelöst durch die Merkmale des Anspruchs 3. Dazu ist ein getaktetes Stellglied vorgesehen, das den über eine Strom- oder Spannungsquelle und einen Zwischenkreis-Kondensator mit einem Betriebsstrom versorgten elektrischen Verbraucher, insbesondere den Elektromotor, in einem außerhalb eines Grenzwert- oder Schwellwertbereiches liegenden Tastverhältnis ansteuert.

Das Stellglied umfasst insbesondere einen elektronischen Leistungsschalter oder -halbleiter, z. B. einen MOS-Feldeffekttransistor (MOSFET) und einen diesen mit dem vorgegebenen Tastverhältnis steuernden oder betreibenden PWM-Generator. Dabei ist die auf eine Taktperiode bezogene Puls- und Pausendauer des PWM-Generators in Abhängigkeit vom Betriebszustand des Elektromotors eingestellt, indem das Tastverhältnis die Einschaltzyklen und die Ausschaltzyklen des Leistungsschalters vorgibt. Dadurch wiederum wird die tatsächliche Motordrehzahl, d. h. der Betriebszustand des Elektromotors bestimmt. Hieraus und aus der Impedanz der Spannungsquelle - gegebenenfalls ergänzt durch eine Drossel oder durch mehrere Drosseln - resultiert die Stromwelligkeit oder der Rippelstrom des Kondensators und somit dessen Belastung.

Dabei können eine von der Art der Last abhängige Anzahl von Leistungsschaltern vorgesehen sein. So umfasst das Stellglied beispielsweise bei einem bürstenbehafteten Motor mindestens einen solchen Leistungsschalter (z. B. zwei Leistungsschalter für eine Drehrichtung bzw. vier Leistungsschalter für zwei Drehrichtungen), während bei einem bürstenlosen Elektromotor das Stellglied für jede der z. B. drei Motorphasen jeweils zwei derartige Leistungsschalter (und somit insgesamt sechs Lesitungsschalter) aufweist. Der oder jeder Leistungsschalter kann dabei mit einer Freilaufdiode beschaltet sein.

Nachfolgend werden Ausführungsbeispiele der Erfindung anhand einer Zeichnung näher erläutert. Darin zeigen:
- FIG 1: in einem Blockschaltbild ein nach dem erfindungsgemäßen Verfahren arbeitendes elektrisches Ansteuersystem eines Motors,
- FIG 2: in einem Strom-Zeit-Diagramm verschiedene Stromverläufe innerhalb des Ansteuersystems,
- FIG 3: einen Ripplestromverlauf in Abhängigkeit vom Tastverhältnis eines Gleichstrommotors,
- FIG 4: in einem Kennlinienfeld den Kondensatorstrom in Abhängigkeit vom Tastverhältnis bei unterschiedlichen Betriebsspannungen, und
- FIG 5: in einem Kennlinienfeld den Kondensatorstrom in Abhängigkeit von der Motordrehzahl bei verschiedenen Betriebsspannungen.

Einander entsprechende Teile sind in allen Figuren mit den gleichen Bezugszeichen versehen.

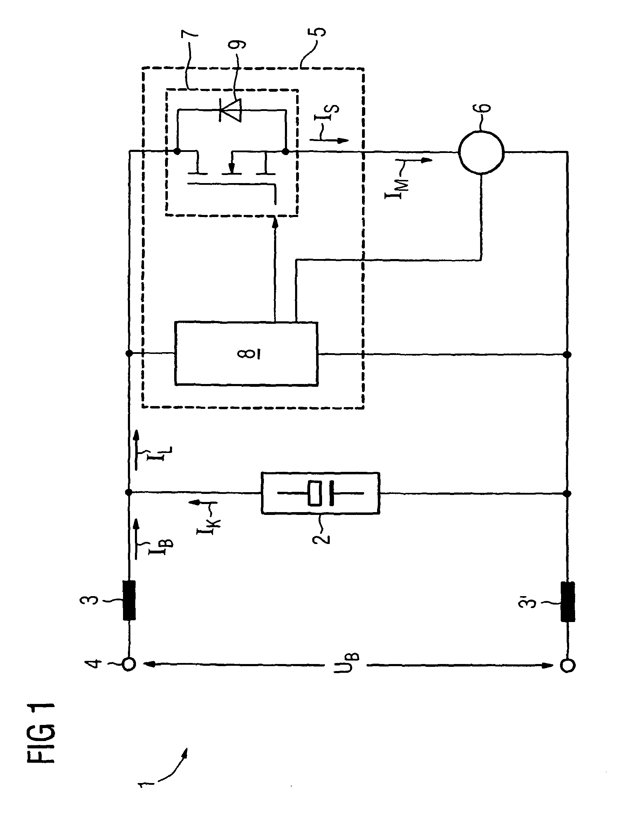

Das in FIG 1 dargestellte elektrische oder elektronische, nachfolgend auch als Ansteuereinrichtung bezeichnete Ansteuersystem 1 umfasst einen Kondensator 2, der über eine Drossel 3 oder über zwei Drosseln 3, 3' an eine Strom- oder Spannungsquelle 4 angeschlossen ist. Das Ansteuersystem 1 umfasst des Weiteren ein Stellglied 5, das einen Elektromotor 6 ansteuert.

Der Elektromotor 6 ist beispielsweise ein Lüfter- oder Gebläsemotor eines Kraftfahrzeugs. Der nachfolgend auch als Lüftermotor 6 bezeichnete Elektromotor wird mit einem Motor-oder Betriebsstrom IM betrieben, der versorgungsseitig einerseits von der Spannungsquelle 4 und andererseits vom Kondensator 2 bereit gestellt wird.

Der Kondensator 2 bildet als so genannter Zwischenkreiskondensator einen Energiezwischenspeicher. Hierzu kann auch eine Kondensatoranordnung mit mehreren Kondensatoren 2 eingesetzt sein. Der Kondensator 2 kann ein Folien- oder Elektrolyt-Kondensator, beispielsweise ein Aluminium-Elektrolyt-Kondensator, sein.

Als Spannungsquelle 4 dient in diesem Ausführungsbeispiel das Bordnetz des Kraftfahrzeugs, das eine Gleichspannung von z.B. 9V bis 16V als Betriebsspannung U zur Verfügung stellt. Der von der Spannungsquelle 4 gelieferte, nachfolgend auch als Batteriestrom bezeichnete Strom I_{B} entspricht einem bestimmten Bruchteil oder Anteil des Motorstroms IM. Der jeweilige Stromanteil stellt sich infolge der Lade- und Entladezyklen des Kondensators 2 ein.

Dazu umfasst das Stellglied 5 einen steuerbaren Schalter 7 und eine diesen ansteuernde Steuereinrichtung 8. Bevorzugt ist als steuerbarer Schalter 7 ein Leistungshalbleiter, beispielsweise ein MOS-Feldeffekttransistor (MOSFET), eingesetzt, der mit einer Freilaufdiode 9 beschaltet ist. Die Steuereinrichtung 8 weist einen oder eine Anzahl von Pulsweitenmodulations-Generatoren (PWM- Generatoren) auf, von denen ein PWM- Generator 8 dargestellt ist. Dieser steuert den nachfolgend als Leistungsschalter 7 bezeichneten Leistungshalbleiter in einem vorgebbaren Takt zwischen einer geöffneten und einer geschlossenen Stellung mit einem bestimmten Tastverhältnis t_{ON/}t_{OFF} an.

Mit diesem Tastverhältnis wird der Elektromotor 6 betrieben. Dies bedeutet, dass der Leistungsschalter 7 für einen bestimmten prozentualen Anteil der Zeitdauer einer Taktperiode t_{P}, beispielsweise 60% von 100µs, eingeschaltet ist (t_{ON} = 0,6 * 100µs = 60µs). Der Schalter 7 ist demzufolge 40% der Zeitdauer der Taktperiode t_{P} ausgeschaltet (t_{OFF} = 0,4 * 100µs = 40µs) . Das auf die auf "1" normierte Taktperiode t_{P} bezogene, nachfolgend auch als duty-cycle d_{c} bezeichnete relative Tastverhältnis d_{C} = t_{ON/}t_{P} ist somit 60%.

Während der Zeitdauer t_{OFF} ist der Leistungsschalter 7 geöffnet oder nicht leitend und der Kondensator 2 wird geladen (Ausschalt- oder Ladezyklus) und es erfolgt eine Pufferung oder Zwischenspeicherung des Batteriestroms I_{B}. In der selben Taktperiode tp ist während der Zeitdauer t_{ON} der Leistungsschalter 7 geschlossen oder leitend und der Kondensator 2 wird entladen (Einschalt- oder Entladezyklus). Der daraus resultierende Entladestrom I_{K} entspricht dem um den von der Spannungsquelle 4 gelieferten Betriebs- oder Batteriestrom I_{B} verminderten Schalterstrom I_{S}, der über den geschlossenen Leistungsschalter 7 während des Einschaltzyklus t_{ON} fließt.

Im oben angegebenen Beispiel wären somit der Anteil des Batteriestroms I_{B} = 60% und der Anteil des Kondensator-Entladestrom I_{K} = 40%. Bei einem eingestellten relativen Tastverhältnis von 60% und einem Betriebsstrom IM des Motors 6 von z. B. IM = 10A würden somit der von der Stromquelle 4 gelieferte Batteriestrom I_{B} = 6A und der vom Kondensator 2 gelieferte Entlade- oder Kondensatorstrom I_{K} = 4A betragen.

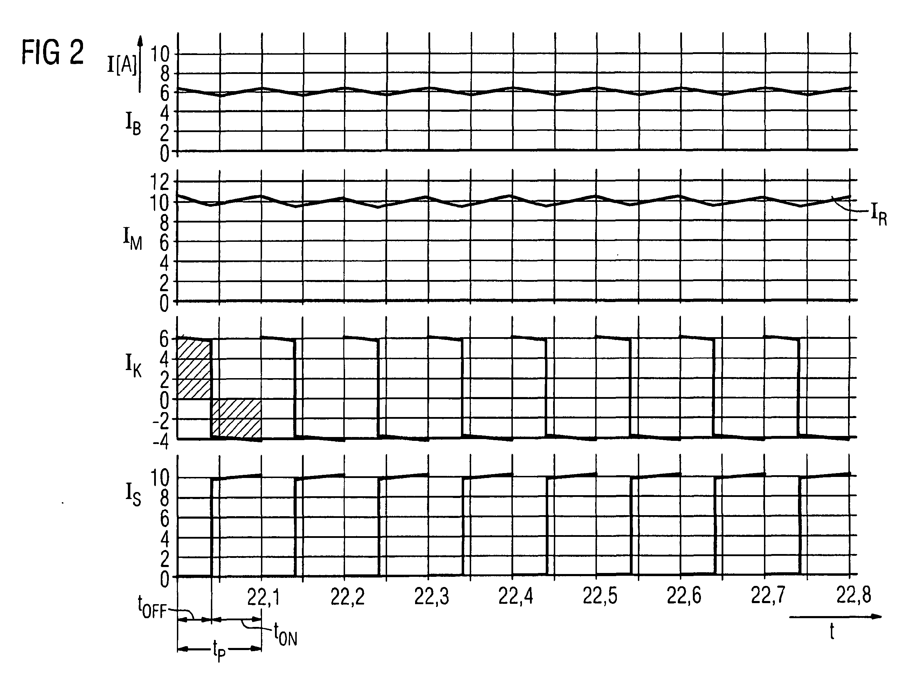

FIG 2 zeigt die entsprechenden Stromverläufe I[A] über die Zeit t. Dabei zeigt das dritte Strom-Zeit-Diagramm von oben den näherungsweise rechteckförmigen Verlauf des Kondensatorstroms I_{K}. Erkennbar ist, dass innerhalb einer Taktperiode t_{P} die Ladedauer des Kondensators etwa 40% der gesamten Taktperiode t_{P} entspricht. Während dieser Zeit t_{OFF} = 0,4 * t_{P} ist der Schalter 7 geschlossen. In dem darauf folgenden Zeitintervall t_{ON} = 0,6 * t_{P} ist der Leistungsschalter 7 geschlossen, so dass in diesem Ausführungsbeispiel wiederum ein Tastverhältnis von 60% eingestellt ist.

Der resultierende Verlauf des Schalterstroms I_{S} über die Zeit t ist in FIG 2 im unteren Strom-Zeit-Diagramm angegeben. Da der Gleichstromanteil des Kondensatorstroms I_{K} = 0 ist, entspricht zumindest die in den Kondensator 2 hinein fließende Ladung der aus diesem abfließenden Entladung. Dies ist im dritten Strom-Zeit-Diagramm von oben in FIG 2 durch die schraffierten Flächen angedeutet, wobei die oberhalb der Null-Linie und die unterhalb dieser liegenden Flächenbereiche gleich groß sind.

In FIG 2 zeigt das zweite Strom-Zeit-Diagramm den Verlauf des Betriebsstroms IM des Elektromotors 6 über die Zeit t. Erkennbar ist, dass dem Gleichstrom I_{M} ≈ 10A ein Wechselstromanteil überlagert ist. Dieser Wechselstromanteil ist näherungsweise gleich dem durch den Lade- und Entladevorgang des Kondensators 2 hervorgerufene so genannte Ripplestrom I_{R}, d. h. der Stromwelligkeit.

In Verbindung mit dem in dem obersten Strom-Zeit-Diagramm in FIG 2 dargestellten Batteriestrom I_{B} ist erkennbar, dass sich der Motorstrom IM aus der Summe der Beträge des Stroms I_{B} und des Kondensatorstroms I_{K} zusammensetzt. Dabei ist aus den Diagrammen ersichtlich, dass während der Einschaltdauer t_{ON} der von der Spannungsquelle 4 gelieferte Strom I_{B} ≈ 0,6 * I_{M} beträgt, während der Anteil des Kondensatorstroms I_{S} ≈ 0,4 * I_{M} beträgt.

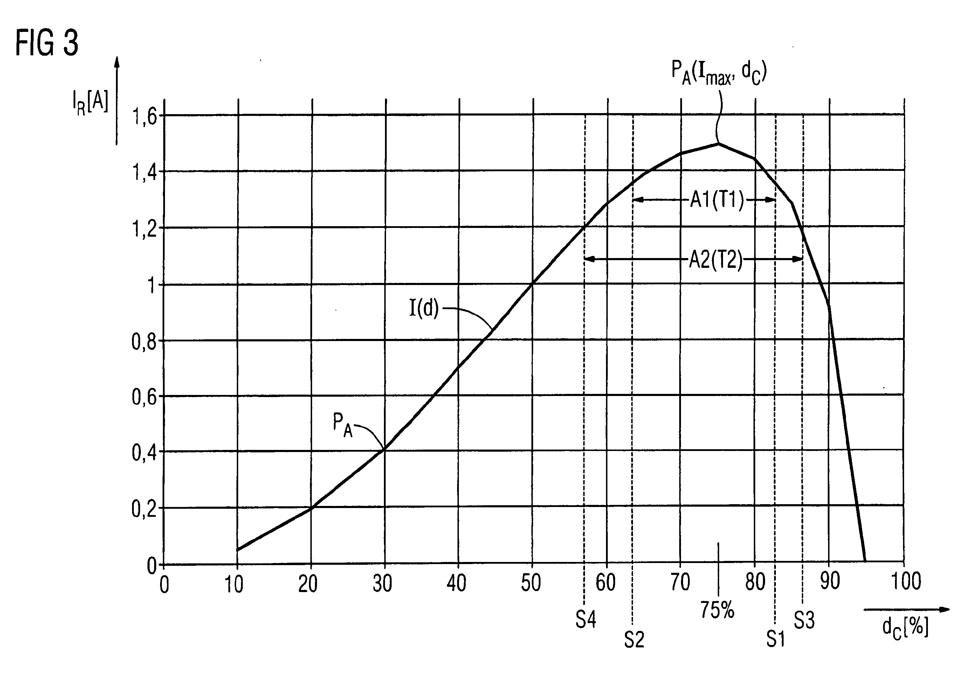

FIG 3 zeigt einen funktionalen Zusammenhang zwischen dem Ripplestrom I_{R}[A] und dem Tastverhältnis d_{C} = t_{ON/}t_{P}. Die entsprechende Ansteuerfunktion I(d_{C}) wurde aus einer Anzahl von Ansteuerpunkten P_{A} bei jeweils einem bestimmten Tastverhältnis ermittelt, mit dem der Leistungsschalter 7 gesteuert und somit der Motor 6 betrieben oder angesteuert worden ist. Der Verlauf der sich daraus ergebenden Ansteuerfunktion I(d_{C}) zeigt einen maximalen effektiven Ripplestrom Iₘₐₓ von ca. 1,5A (je Kondensator 2) bei einem relativen Tastverhältnis oder duty-cycle d_{c} von ca. 75%.

Da nun erkanntermaßen die Belastung des Kondensators 2 umso größer ist, je größer der Ripplestrom I_{R} ist, wird bei der Ansteuerung des Leistungsschalters 7 und damit für den Betrieb des Motors 6 dieser Maximalbereich Iₘₐₓ(d_{C}) ausgeschlossen oder ausgeblendet. Konkret wird bei der Ansteuerung des Schalters 7 mittels des PWM-Generators 8 bei einer entsprechend ausgelegten Ansteuereinrichtung 1 mit einem bestimmte Kondensatordaten aufweisenden Kondensator 2 und mit einem bestimmte Motordaten aufweisenden Elektromotor 6 ein solches Tastverhältnis oder ein solcher duty-cycle d_{c} eingestellt, das bzw. der außerhalb eines nachfolgend als verbotener Bereich bezeichneten Ausschlussbereiches A1, A2 liegt.

Hierzu werden dem PWM-Generator 8 entsprechende Schwell- oder Grenzwerte S1, S2 vorgegeben, die nicht überschritten bzw. nicht unterschritten werden. Diese Grenzwerte S1 und S2 definieren somit einen Ausschlussbereich A1 für entsprechende Tastverhältnisse d_{C}, die von der Steuereinrichtung 8 nicht eingestellt werden. Dieser vorliegend zwischen ca. d_{C} = 65% und d_{C} = 85% liegende Bereich A1 des ausgeschlossenen oder verbotenen Tastverhältnisses d_{C} wird dem PWM-Generator 8 beispielsweise dann vorgegeben, wenn die Kondensatortemperatur T_{C} einen vorgegebenen ersten Temperatur-Grenzwert T1 erreicht oder überschreitet.

Analog ist ein zweiter Ausschlussbereich A2 dem PWM-Generator 8 vorgegeben, der zwischen einem oberen Grenzwert S3 mit d_{C} ≈ 87,5% und einem unteren Grenzwert S4 mit d_{C} ≈ 57,5% liegt. Dieser vergleichsweise große ausgeblendete Ausschlussbereich A2 ist dem PWM-Generator 8 bei Erreichen oder Überschreiten eines zweiten Temperatur-Grenzwertes T2 der Betriebstemperatur T_{C} des Kondensators vorgegeben. Das entsprechende Tastverhältnis d_{C} ist somit derart eingestellt, dass ein Überschreiten des Grenzwertes T1, T2 zuverlässig vermieden ist. Der verbotene, ausgeschlossene oder ausgeblendete Bereich A1, A2 kann jedoch eventuell kurzzeitig durchfahren werden.

Die ausgeschlossenen oder ausgeblendeten Bereiche A1, A2 können auch in Abhängigkeit vom Kondensatorstrom I_{E} selbst und/oder von der Betriebsspannung U_{B} eingestellt werden. Auch können diese Bereiche A1, A2 in Abhängigkeit von der Umgebungstemperatur vorgegeben werden. Des Weiteren kann das jeweilige Tastverhältnis d_{C} direkt in Abhängigkeit vom Ripplestrom I_{R} unter Ausschluss des dem Maximalwert Iₘₐₓ zugeordneten Tastverhältnis d_{C}, insbesondere unter Ausschluss des Bereiches A1, A2 eingestellt werden. Durch diese Betriebsweise des Elektromotors 6 und damit durch diese Art und Weise der Ansteuerung des PWM-Generators 8 wird eine Überlastung des Kondensators 2 vermieden und somit dessen Lebensdauer erhöht.

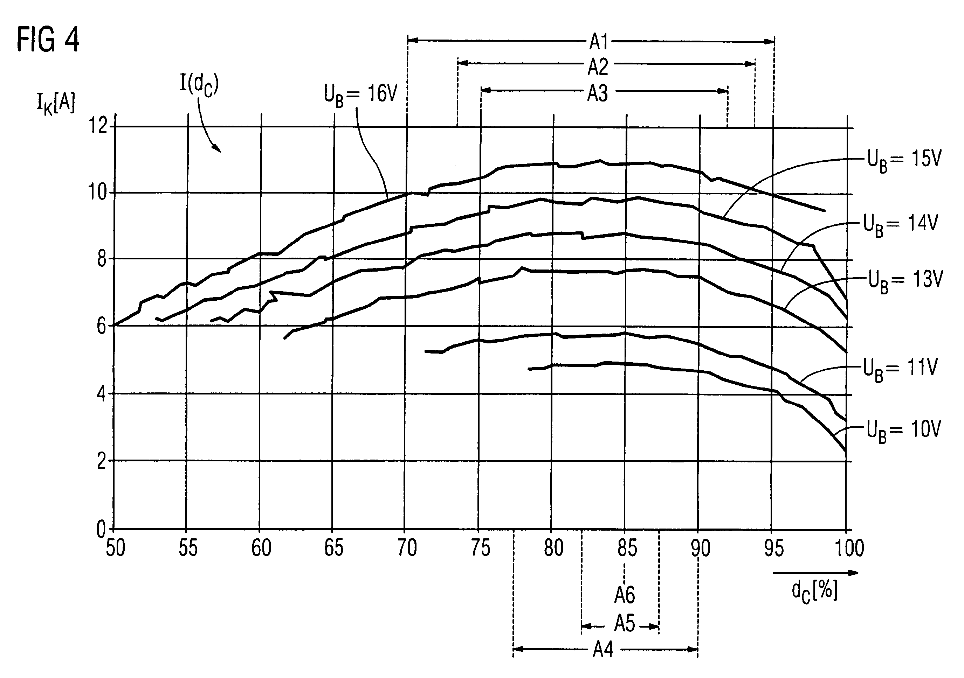

FIG 4 zeigt in einem Kennlinienfeld den Kondensatorstrom I_{E} bei unterschiedlichen Betriebsspannungen U_{B}, wobei die Betriebsspannung U_{B} in Richtung zunehmender Stromwerte von Kennlinie zu Kennlinie zunimmt. Die Kennlinien repräsentieren den Verlauf des jeweiligen Kondensatorstroms I_{K} in Abhängigkeit vom dem PWM-Generator 8 vorgegebenen relativen Tastverhältnis d_{C}. Die Stromverläufe zeigen dabei gewisse Kommutierungsschwankungen, die durch den eine ohmisch induktive Last darstellenden Elektromotor 6 hervorgerufen werden. Erkennbar wiederum sind bestimmte Tastverhältnisse d_{c}, bei denen der jeweilige Kondensatorstrom I_{K} ein Maximum Iₘₐₓ erreicht. Der jeweilige Ripple-Strombetrag oder -wert des Kondensatorstroms I_{K} ist dabei abhängig von der eingestellten Betriebsspannung U_{B}. Der Elektromotor 6 ist dabei ein bürstenloser Motor, während bei der Ansteuerkennlinie I(d_{C}) gemäß FIG 3 ein Bürstenmotor simuliert ist.

Aus diesem Kennlinienfeld mit den den jeweiligen Betriebsspannungen U_{B} zugeordneten Ansteuerfunktionen I(d_{C}) ergeben sich wiederum auszuschließende Bereiche Aₙ, mit n = 1,...,6, die jeweils zwischen einem einen oberen Grenzwert S1 und einem einen unteren Grenzwert S2 repräsentierenden Tastverhältnis d_{C} liegen. So ist beispielsweise bei einer Betriebsspannung U_{B} von ca. 16V jedes zwischen 70% und 95% liegendes Tastverhältnis d_{C} ausgeschlossen.

Dem gegenüber ist bei einer Betriebsspannung U_{B} von ca. 10V lediglich ein Tastverhältnis d_{C} von (85 ± 5)% ausgeschlossen. Der auszuschließende Bereich An mit dem PWM-Generator 8 nicht vorgegebenen und daher von diesem nicht eingestellten Tastverhältnissen d_{c} kann betriebsbedingt auch größer oder kleiner als die dargestellten Bereiche An gewählt werden.

Analog zu der Ausführungsform in FIG 3 kann auch bei der Variante nach FIG 4 je nach eingestellter Betriebsspannung U_{B} stets ein oberhalb des obersten Grenzwertes S1 liegendes Tastverhältnis d_{C} eingestellt werden. Im Falle einer Betriebsspannung von U_{B} = 13V kann beispielsweise ein Tastverhältnis von d_{C} > 90% eingestellt werden. Zwar würde auch hier ein Tastverhältnis von d_{C} < 80% nicht zu einer erhöhten Kondensatorbelastung führen. Allerdings wäre bei einem derart eingestellten Tastverhältnis d_{C} zu berücksichtigen, dass gegebenenfalls in Folge der dadurch bedingten vergleichsweise geringen Motorleistung ein gewünschter Betriebszustand, z. B. ein geforderter Lüfterbetrieb, nicht gegeben ist. Die entsprechenden Kennlinien oder Kennlinienfelder bzw. die zugehörigen Ansteuerfunktionen I(d_{C}) sind beispielsweise in einem elektronischen Speicher des Stellgliedes 5 oder einer übergeordneten Steuereinrichtung hinterlegt.

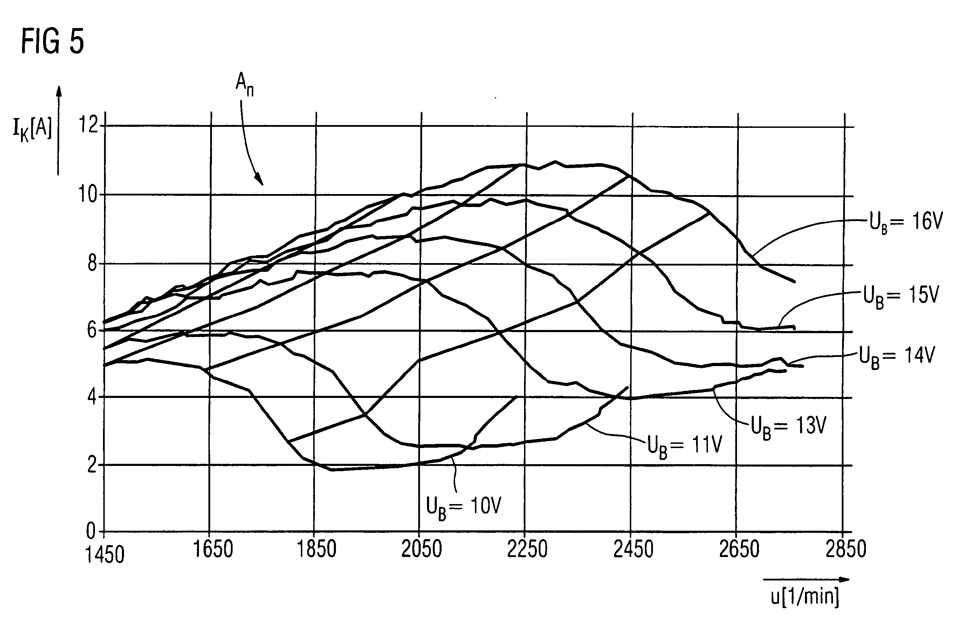

FIG 5 zeigt analog zu FIG 4 ein Kennlinienfeld mit Ansteuerfunktionen I(u) bei unterschiedlichen Betriebsspannungen U_{B}, jedoch in Abhängigkeit von der Motordrehzahl u[1/min]. Im Kennlinienfeld sind zudem die Ansteuerfunktionen I(u) kreuzende Linien gleicher Tastverhältnisse d_{C} zwischen 70% und 100% hinterlegt. Aus dem Maximalwert des jeweiligen Kondensatorstroms I_{E} ergeben sich bei gegebener Betriebsspannung U_{B} für bestimmte Motordrehzahlen u wiederum Bereiche mit auszuschließenden oder verbotenen Tastverhältnissen d_{C}. Gemäß diesem Kennlinienfeld werden bevorzugt bei der Ansteuerung des Leistungsschalters 7 nur solche Tastverhältnisse d_{C} eingestellt, die oberhalb eines gespeicherten ersten, oberen Schwell- oder Grenzwertes S1 von ca. 90% oder unterhalb eines gespeicherten zweiten, unteren Schwell- bzw. Grenzwertes S2 von ca. 70% liegen.

Die Darstellungen gemäß den Figuren 3 bis 5 zeigen somit den Betriebszustand des Kondensators 2 in Abhängigkeit vom jeweiligen Tastverhältnis d_{C} sowie die jeweils auszuschließenden oder auszublendenden Tastverhältnisse d_{C}. Durch Einstellung eines Tastverhältnisses d_{C}, das oberhalb oder unterhalb eines bestimmten Grenzwertes Sₘ, mit m = 1 bzw. m = 2, oder außerhalb eines Bereiches An liegt, können unerwünscht hohe Betriebsbelastungen des Kondensators 2 zuverlässig vermieden werden. Der jeweilige Grenzwert Sₘ bzw. Ausschlussbereich An wiederum kann anhand der aktuellen Kondensatortemperatur T_{C} bestimmt werden. Diese wiederum kann direkt gemessen oder aber aus anderen Betriebsparametern, wie insbesondere der Betriebsspannung U_{B}, dem Kondensatorstrom I_{K}, dem Ripplestrom I_{R}, dem Batteriestrom I_{B} und/oder dem Batterie- bzw. dem Motorstrom I_{M} abgeleitet werden.

Beim Betrieb des Elektromotors 6 wird dazu die auf eine Taktperiode t_{P} bezogene Pulsdauer t_{ON} sowie Pausendauer t_{OFF} und damit das Tastverhältnis d_{C} des PWM-Generators 8 eingestellt. Das jeweilige Tastverhältnis d_{C} gibt dabei die Zeitdauer t_{ON} der Einschaltzyklen und die Zeitdauer t_{OFF} der Ausschaltzyklen des Leistungsschalters 7 vor. Dabei sind die zu einer erhöhten Belastung oder sogar zu einer Überlastung des Kondensators 2 führenden Tastverhältnisse d_{C} vermieden. Dies ist entweder durch deren Ausschluss oder aber dadurch erreichbar, dass die entsprechenden Tastverhältnisse d_{C} lediglich kurzzeitig eingestellt sind.

Eine entsprechende kurzzeitige Ansteuerung des Leistungsschalters 7 mit einem zu vermeidenden Tastverhältnis d_{c} kann beispielsweise dadurch erfolgen, dass der PWM-Generator 8 nur mit einer begrenzten Anzahl an Taktperioden tp mit diesem Tastverhältnis d_{c} angesteuert wird. Anschließend erfolgt dann die Ansteuerung des PWM-Generators 8 mit einem außerhalb des vorgegebenen Bereiches An liegenden Tastverhältnis d_{C} für eine Anzahl von Taktperioden t_{P}, deren Gesamtzahl der beispielsweise von einem Steuergerät eines Kraftfahrzeugs vorgegebenen Einschaltdauer des Lüfters und damit der aktuell geforderten Betriebsdauer des Motors 6 entspricht.

Bei einer bevorzugten Variante des Verfahrens wird oberhalb einer vorgegebenen Temperaturschwelle T1, T2 der Kondensatortemperatur T_{C} und abhängig von der jeweils eingestellten Betriebsspannung U_{B} ein bestimmter Drehzahlbereich u beim Betrieb des Elektromotors 6 vermieden oder ausgeblendet. Hierzu werden wiederum diejenigen zugehörigen Tastverhältnisse d_{C} ausgeblendet, die zu einem im Bereich des Maximalwertes liegenden Kondensatorstrom I_{K} oder Ripplestrom I_{R} führen würden.

Da in einem Kraftfahrzeug bei hohen Umgebungstemperaturen auch eine entsprechend hohe Kühlleistung und damit eine entsprechend hohe Lüfterleistung mit der Folge einer entsprechend hohen Lüftermotordrehzahl u benötigt wird, bewirkt ein Überspringen oder Auslassen eines bestimmten Drehzahlbereichs und die Einstellung einer vergleichsweise hohen Motordrehzahl u praktisch keinen Nachteil.

Des Weiteren sind in der Regel bei hohen Umgebungstemperaturen keine hohen Versorgungsspannungen U_{B} für den Lüfterantrieb 6 zu erwarten, so dass das erfindungsgemäße Verfahren praktisch keine Betriebseinschränkung darstellt. Ferner sind hinsichtlich des Materialeinsatzes bei einem nach diesem Verfahren arbeitenden elektrischen oder elektronischen Ansteuersystem 1 keine zusätzlichen Bauteile und insbesondere kein überdimensionierter Kondensator 2 erforderlich. Daher können insgesamt die Baugröße und das Gewicht des Antriebs- oder Ansteuersystems 1 gering gehalten werden. Gleichzeitig kann eine Überlastung des Kondensators 2 zuverlässig vermieden und somit die geforderte Lebensdauer eingehalten werden.

## Patentansprüche

1. Verfahren zum Betreiben eines elektrischen Verbrauchers (6), insbesondere eines Elektromotors, dem ein von einer Spannungsquelle (4) erzeugter und von einem Kondensator (2) gepufferter Betriebsstrom (IM) über ein Stellglied (5) zugeführt wird, das mit einem außerhalb eines Ausschlussbereiches (An) liegenden Tastverhältnis (d_{c}) angesteuert wird, wobei der Ausschlussbereich (An) durch einen ersten Grenzwert (S₁, S₃) und einen zweiten Grenzwert (S₂, S₄) definiert wird und das Stellglied (5) mit einem oberhalb des ersten Grenzwertes (S₁, S₃) oder unterhalb des zweiten Grenzwertes (S₂, S₄) liegenden Tastverhältnis (d_{c}) angesteuert wird,
wobei das Tastverhältnis (d_{c}) anhand einer Ansteuerungsfunktion (I(d_{c}), I(u)) unter Vermeidung oder zeitlicher Begrenzung eines im Ausschlussbereich (An) liegenden Maximums (P_{A}) der Ansteuerfunktion (I(d_{c}), I(u)) eingestellt wird, und
wobei das Tastverhältnis (d_{c}) in Anhängigkeit vom Kondensatorstrom (I_{K}) oder vom Ripplestrom (I_{R}) des Kondensators (2) eingestellt wird, und
wobei das Tastverhältnis (d_{c}) in Abhängigkeit von der Betriebstemperatur (T_{c}) des Kondensators (2) eingestellt wird, und
wobei das Tastverhältnis (d_{c}) in Abhängigkeit von der Betriebsspannung (U_{B}) eingestellt wird.

2. Verfahren nach Anspruch 1, wobei das Stellglied (5) mit einem Tastverhältnis (d_{c}) kleiner oder gleich 100% und grösser oder gleich einem oberen (ersten) Grenzwert (S₁, S₃) entsprechenden Tastverhältnis (d_{c}) angesteuert wird.

3. Ansteuersystem (1) für einen elektrischen Verbraucher (6), insbesondere für einen Elektromotor, mit einer einen Betriebsstrom (IM) erzeugenden Spannungsquelle (4) und mit einem Kondensator (2) sowie mit einem getakteten Stellglied (5), das den Verbraucher (6) in einem außerhalb eines Ausschlussbereiches (Sₘ, An) liegenden Tastverhältnis (d_{c}) ansteuert, wobei der Ausschlussbereich (An) durch einen ersten Grenzwert (S₁, S₃) und einen zweiten Grenzwert (S₂, S₄) definiert wird und das Stellglied (5) den Verbraucher (6) in einem oberhalb des ersten Grenzwertes (S₁, S₃) oder unterhalb des zweiten Grenzwertes (S₂, S₄) liegenden Tastverhältnis (d_{c}) ansteuert,
wobei das Tastverhältnis (d_{c}) anhand einer Ansteuerungsfunktion (I(d_{c}), I(u)) unter Vermeidung oder zeitlicher Begrenzung eines im Ausschlussbereich (An) liegenden Maximums (P_{A}) der Ansteuerfunktion (I(d_{c}), I(u)) eingestellt wird, und
wobei das Tastverhältnis (d_{c}) in Anhängigkeit vom Kondensatorstrom (I_{K}) oder vom Ripplestrom (I_{R}) des Kondensators (2) eingestellt wird, und
wobei das Tastverhältnis (d_{c}) in Abhängigkeit von der Betriebstemperatur (T_{c}) des Kondensators (2) eingestellt wird, und
wobei das Tastverhältnis (d_{c}) in Abhängigkeit von der Betriebsspannung (U_{B}) eingestellt wird.

4. Ansteuersystem nach Anspruch 3, wobei das Stellglied (5) einen elektronischen Leistungsschalter (7) und einen diesen mit dem vorgegebenen Tastverhältnis (d_{c}) steuernden PWM-Generator (8) umfasst.

5. Ansteuersystem nach Anspruch 3 oder 4, bei dem die auf eine Taktperiode (t_{P}) bezogene Puls- und Pausendauer (t_{ON}, t_{OFF}) des PWM-Generators (8) in Abhängigkeit vom Betriebszustand des Kondensators (2) derart eingestellt ist, dass mit dem die Zeitdauer (t_{ON}) der Einschaltzyklen und die Zeitdauer (T_{OFF}) der Ausschaltzyklen des Leistungsschalters (7) bestimmenden aktuellen Tastverhältnis (d_{c}) eine einen Grenzwert (Tl, T2) überschreitende Betriebstemperatur (T_{c}) des Kondensators (2) vermieden ist.

## Claims

1. A method of operating an electrical load (6), in particular an electric motor, to which an operating current (I_{M}) generated by a voltage source (4) and buffered by a capacitor (2) is supplied via an actuator (5), which is driven with a duty factor (d_{c}) lying outside an exclusion range (An), wherein the exclusion range (An) is defined by a first limit value (S₁, S₃) and a second limit value (S₂, S₄) and the actuator (5) is driven with a duty factor (d_{c}) lying above the first limit value (S₁, S₃) or below the second limit value (S₂, S₄),
wherein the duty factor (d_{c}) is adjusted by means of a drive function (I(d_{c}), I(u)) avoiding or with time limitation of a maximum (P_{A} of the drive function (I(d_{c}), I(u)) lying in the exclusion range (An), and
wherein the duty factor (d(_{c})) is adjusted as a function of the capacitor current (I_{K}) or of the ripple current (I_{R}) of the capacitor (2), and
wherein the duty factor (d_{c}) is adjusted as a function of the operating temperature (T_{c}) of the capacitor (2), and wherein the duty factor (d_{c}) is adjusted as a function of the operating voltage (U_{B}).

2. A method according to claim 1, wherein the actuator (5) is driven with a duty factor (d_{c}) of less than or equal to 100 % and greater than or equal to a duty factor (d_{c}) corresponding to the upper (first) limit value (S₁, S₃).

3. A drive system (1) for an electrical load (6), in particular for an electric motor, having a voltage source (4) generating an operating current (I_{M}) and having a capacitor (2) and having a timed actuator (5), which drives the load (6) in a duty factor (d_{c}) lying outside an exclusion range (Sₘ, An), wherein the exclusion range (An is defined by a first limit value (S₁, S₃) and a second limit value (S₂, S₄) and the actuator (5) drives the load (6) in a duty factor (d_{c}) lying above the first limit value (S₁, S₃) or below the second limit value (S₂, S₄), wherein the duty factor (d_{c}) is adjusted by means of a drive function (I(d_{c}), I(u)) avoiding or with time limitation of a maximum (P_{A} of the drive function )I(d_{c}), I(u)) lying in the exclusion range (Aₙ, and
wherein the duty factor (d_{(c)}) is adjusted as a function of the capacitor current (I_{K}) or of the ripple current (I_{R}) of the capacitor (2), and
wherein the duty factor (d_{c}) is adjusted as a function of the operating temperature (T_{c}) of the capacitor (2), and wherein the duty factor (d_{c}) is adjusted as a function of the operating voltage (U_{B}).

4. A drive system according to claim 3, wherein the actuator (5) comprises an electronic circuit-breaker (7) and a PWM generator (8) controlling the latter with the predetermined duty factor (d_{c}).

5. A drive system according to claim 3 or claim 4, in which the pulse and pause duration (t_{ON}, t_{OFF}) of the PWM generator (8) related to an elementary period (tp) is adjusted in such a way, as a function of the operating state of the capacitor (2), that with the instantaneous duty factor (d_{c}) determining the time duration (t_{ON}) of the on cycles and the time duration (T_{OFF}) of the off cycles, an operating temperature (T_{c}) of the capacitor (2) exceeding a limit value (T₁, T₂) is avoided.

## Revendications

1. Méthode pour actionner un consommateur électrique (6), en particulier un moteur électrique, auquel est amené un courant de service (I_{M}) produit par une source de tension (4) et stocké par un condensateur (2) par l'intermédiaire d'un élément de réglage (5), qui est commandé avec un taux d'impulsions (de) situé hors de la plage d'exclusion (Aₙ), la plage d'exclusion (Aₙ) étant définie par une première valeur limite (S₁, S₃) et une seconde valeur limite (S₂, S₄) et l'élément de réglage (5) étant commandé à un taux d'impulsions (d_{c}) situé au-delà de la première valeur limite (S₁, S₃) ou en-deçà de la seconde valeur limite (S₂, S₄),
le taux d'impulsions (de) étant ajusté à l'aide d'une fonction de commande (I(d_{c}), I(u)) en évitant ou en limitant dans la durée un maximum (P_{A}) de la fonction de commande (I(d_{c}), I(u)) situé dans la plage d'exclusion (Aₙ), et
le taux d'impulsions (d_{c}) étant adapté en fonction du courant de condensateur (I_{K}) ou du courant ondulé (I_{R}) du condensateur (2), et
le taux d'impulsions (d_{c}) étant adapté en fonction de la température de service (T_{c}) du condensateur (2), et
le taux d'impulsions (d_{c}) étant adapté en fonction de la tension de service (U_{B}).

2. Procédé selon la revendication 1, l'élément de réglage (5) étant commandé avec un taux d'impulsions (d_{c}) inférieur ou égal à 100 et supérieur ou égal à un taux d'impulsions (d_{c}) correspondant à la (première) valeur limite supérieure (S₁, S₃).

3. Système de commande (1) pour un consommateur électrique (6), en particulier pour un moteur électrique, doté d'une source de tension (4) produisant un courant de service (I_{M}) et d'un condensateur (2) ainsi que d'un élément de réglage cadencé (5), qui commande le consommateur (6) à un taux d'impulsions (d_{c}) situé en-dehors d'une plage d'exclusion (Sₘ, Aₙ),
la plage d'exclusion (Aₙ) étant définie par une première valeur limite (S₁, S₃) et une seconde valeur limite (S₂, S₄) et l'élément de réglage (5) commandant le consommateur (6) à un taux d'impulsions (d_{c}) situé au-delà de la première valeur limite (S₁, S₃) ou en-deçà de la seconde valeur limite (S₂, S₄),
le taux d'impulsions (d_{c}) étant ajusté à l'aide d'une fonction de commande (I(d_{c}), I(u)) en évitant ou en limitant dans la durée un maximum (P_{A}) de la fonction de commande (I(d_{c}), I(u)) situé dans la plage d'exclusion (Aₙ), et
le taux d'impulsions (d_{c}) étant adapté en fonction du courant de condensateur (I_{K}) ou du courant ondulé (I_{R}) du condensateur (2), et
le taux d'impulsions (d_{c}) étant adapté en fonction de la température de service (T_{c}) du condensateur (2), et
le taux d'impulsions (d_{c}) étant adapté en fonction de la tension de service (U_{B}).

4. Système de commande selon la revendication 3, l'élément de réglage (5) comprenant un interrupteur de puissance électronique (7) et un générateur MID (8) commandant ce dernier au taux d'impulsions (de) prédéterminé.

5. Système de commande selon la revendication 3 ou 4, dans lequel la durée d'impulsions et de pause (t_{ON}, T_{OFF}) du générateur MID (8) se référant à une période d'horloge (tp) est paramétrée en fonction de l'état de service du condensateur (2) de telle sorte que, avec le taux d'impulsions actuel (d_{c}) déterminant la durée temporelle (t_{ON}) des cycles de marche et la durée temporelle (t_{OFF}) des cycles d'arrêt de l'interrupteur de puissance (7), une température de service (T_{c}) du condensateur (2) dépassant une valeur limite (T1, T2) est évitée.
